Europäisches Patentamt

European Patent Office

Office européen des brevets

(11) Publication number: **0 173 580**
**B1**

(12) **EUROPEAN PATENT SPECIFICATION**

(45) Date of publication of patent specification: **02.11.88**

(51) Int. Cl.⁴: **F 25 B 41/06, B 60 H 1/32**

(21) Application number: **85306178.6**

(22) Date of filing: **30.08.85**

(54) **Orifice tube for an automotive air conditioning system.**

(30) Priority: **31.08.84 JP 131270/84**

(43) Date of publication of application:
**05.03.86 Bulletin 86/10**

(45) Publication of the grant of the patent:
**02.11.88 Bulletin 88/44**

(84) Designated Contracting States:
**DE FR GB**

(56) References cited:
FR-A- 877 715
GB-A- 581 043
US-A-2 241 086
US-A-2 319 498
US-A-2 508 224
US-A-2 576 610
US-A-3 815 379

(73) Proprietor: **SANDEN CORPORATION**
**20 Kotobuki-cho**
**Isesaki-shi Gunma-ken (JP)**

(72) Inventor: **Sato, Motoharu**
**3-11-38 Kojimaminami**
**Honjo-shi Honjo, 367 (JP)**

(74) Representative: **Jackson, Peter Arthur et al**
**GILL JENNINGS & EVERY 53-64 Chancery Lane**
**London WC2A 1HN (GB)**

Courier Press, Leamington Spa, England.

EP 0 173 580 B1

## Description

The invention relates to an orifice tube for use as an expansion valve within an automotive air conditioning system.

A typical, known refrigeration circuit for an automotive air conditioning system includes a compressor driven by an automobile engine, a condenser, an orifice tube used as an expansion valve and an evaporator. In standard operating fashion, the refrigerant is discharged from the compressor and passes, respectively, through the condenser, the orifice tube and the evaporator, and returns to the inlet port of the compressor. The refrigerant causes the evaporator to absorb surrounding heat from the inside of a car or other vehicle.

It is difficult to control the mass flow of the refrigerant flowing through the refrigerant circuit of an automotive air conditioning system with a typical orifice tube used as an expansion valve because such an orifice tube has a fixed volume. In particular, when the air conditioning load is low, the volume of the refrigerant flowing through the circuit is too much; and, when the air conditioning system must refrigerate or cool quickly, it is impossible to increase the volume of the flowing refrigerant according to the increase of the air conditioning load.

Both FR—A—877715 and US—A—2241086 describe orifice tubes suitable for use in an automotive air conditioning system and having a housing and means within the housing for providing a variable refrigerant mass flow as a function of the load. Of greater relevance is US—A—2319498, which discloses an orifice tube (hereinafter referred to as of the kind described) for use in an automotive air conditioning system as an expansion valve for expanding refrigerant circulating in a refrigeration circuit from its high pressure side to its low pressure side and into an evaporator, the orifice tube comprising a housing and means within the housing for providing a variable cross section for the circulation of refrigerant in the circuit; wherein the means comprises a flow area through the housing providing a first resistance to the flow of the refrigerant through the orifice tube. This arrangement enables an automatic change in the cross-section of the flow area in response to environmental temperature, but not to air conditioning load.

According to the invention, an orifice tube of the kind described is characterised in that the means includes a mass of porous material carried in the housing and providing a second resistance to the flow of the refrigerant through the orifice tube parallel to the first resistance, the second resistance being greater than the first resistance whereby the effective cross section of the tube, increases as the load on the air conditioning system increases.

An air conditioning system incorporating an orifice tube in accordance with the invention is illustrated in the accompanying drawings, in which:—

Figure 1 shows a refrigeration circuit;

Figure 2 is an axial section of the orifice tube;

Figure 3 is a graph illustrating the relation between the air conditioning load and the mass flow of the refrigerant circulating within the circuit; and,

Figure 4 is a graph illustrating the relation between the air conditioning load and the pressure loss across the orifice tube.

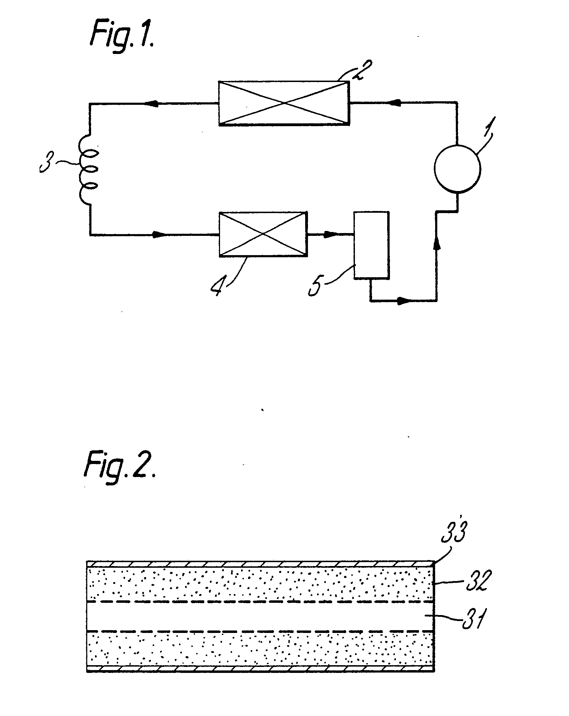

Referring to Figure 1, the illustrated refrigeration circuit for an automotive air conditioning system includes a compressor 1, a condenser 2, an orifice tube 3, an evaporator 4 and an accumulator 5. The refrigerant discharged from the outlet port of the compressor 1 goes through the condenser 2, orifice tube 3, evaporator 4 and accumulator 5, and returns to the inlet port of compressor 1.

As shown in Figure 2, the orifice tube 3 comprises a cylindrical housing 33 and an annular cylindrical mass of porous plastics or metallic material 32. The porous material 32 extends axially through the housing 33 and has a cavity 31 extending coaxially through it.

When the air conditioning load is low, and the volume of the required refrigerant is low, the refrigerant mainly flows through the cavity 31 which has a relatively low flow resistance. When the air conditioning load is high, and the volume of the required refrigerant is greater, the refrigerant is pumped at a higher pressure and rate and overcomes the greater resistance to flow in the porous material 32, so that the volume of the refrigerant which passes through the porous material 32 increases. The volume and, hence, the mass flow of the refrigerant flowing through the refrigeration circuit is thus controlled and increases because the volume of refrigerant present in the porous material 321, which did not flow during the low load conditions, enters the circulating flow during the high load condition.

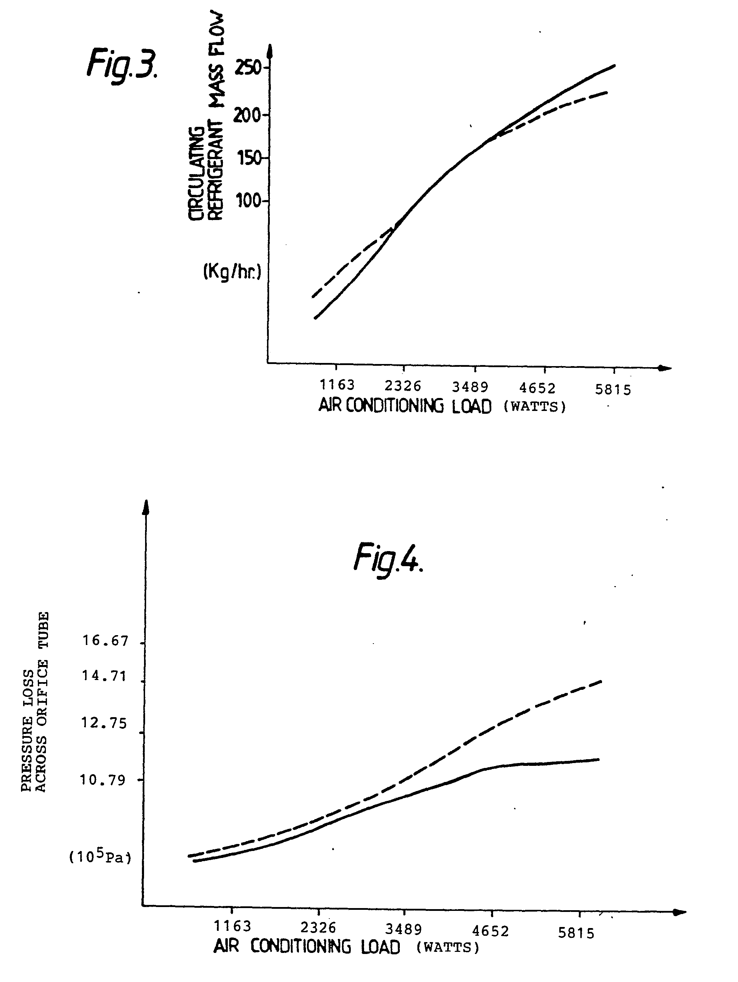

Figure 3 shows the relationship between the air conditioning load and the mass flow in of the refrigerant circulating through the circuit, referred to as the circulating refrigerant mass flow. The circulating refrigerant mass flow in an automotive air conditioning system in accordance with the present invention utilizing an orifice tube having a cavity diameter of 1.5 mm and a porous material outer diameter of 4.0 mm is illustrated in solid line; and the circulating refrigerant mass flow in an automotive air conditioning system using a typical existing orifice tube having an open interior, for example, with an inner diameter of 1.9 to 2.0 mm, is illustrated in broken line. The circulating refrigerant mass flow using the orifice tube of the present invention is less than the circulating refrigerant mass flow in the existing automotive air conditioning system when the air conditioning load is low, for example, in the 1163 to 2326 W (1000 to 2000 kcal/hr) range. Also the circulating refrigerant mass flow in the automotive air conditioning system in accordance with the present invention is more than that in the existing automotive air conditioning system when the air conditioning load is high, for example, above 3489 W (3000 kcal/hr). The orifice tube of the present invention thus provides a variable volume of refrigerant according to the load requirements of the air conditioning system.

Figure 4 shows the relationship between the air conditioning load and the pressure loss across the orifice tube. The pressure loss illustrated in solid line is for an automotive air conditioning system in accordance with the present invention utilizing an orifice tube with a cavity diameter of 1.5 mm and a porous material outer diameter of 4.0 mm; and the pressure loss illustrated in broken line is for a typical existing automotive air conditioning system using an orifice tube with an open interior having an inner diameter of 1.9 to 2.0 mm. The pressure loss using the orifice tube of the present invention is less than that in the existing automotive air conditioning system; particularly, when the air conditioning load is high, the pressure loss in the automotive air conditioner in accordance with the present invention is much less than that in the existing automotive air conditioner, for example, approximately $2.94 \times 10^5$ Pa (3 kg/cm²) less [$10.79 \times 10^5$ to $12.75 \times 10^5$ Pa (11 to 13 kg/cm²)] at an air conditioning load of 5815 W (5000 kcal/hr). Operating the air conditioning system at such lower pressure losses across the orifice tube enhances the efficiency of the system.

As mentioned above, since the area through which the refrigerant flows in orifice tube 3 in accordance with the present invention comprises both the cavity portion 31 and the porous material 32, the volume of the refrigerant which circulates through to the circuit provided by the porous material 32, and hence the volume of the refrigerant can be properly controlled according to the air conditioning load, particularly during low air conditioning load or high air conditioning load.

## Claims

1. An orifice tube for use in an automotive air conditioning system as an expansion valve for expanding refrigerant circulating in a refrigeration circuit from its high pressure side to its low pressure side and into an evaporator, the orifice tube comprising a housing (33) and means (32) within the housing for providing a variable cross section for the circulation of refrigerant in the circuit; wherein the means (32) comprises a flow area (31) through the housing providing a first resistance to the flow of the refrigerant through the orifice tube, characterised in that the means (32) includes a mass (32) of porous material carried in the housing and providing a second resistance to the flow of the refrigerant through the orifice tube parallel to the first resistance, the second resistance being greater than the first resistance whereby the effective cross section of the tube increases as the load on the air conditioning system increases.

2. An orifice tube according to claim 1, wherein the flow area comprises a cavity (31) formed through the porous material (32).

3. An orifice tube according to claim 1 or claim 2, wherein the housing (33) is cylindrical and the porous material (32) is cylindrical and extends coaxially within the tube.

4. An orifice tube according to claim 2, wherein the cavity (31) extends coaxially through the porous material (32).

5. An orifice tube according to any one of the preceding claims, wherein the porous material is plastics.

6. An orifice tube according to any one of claims 1 to 4, wherein the porous material is metallic.

7. An automotive air conditioning system having a refrigeration circuit incorporating an expansion valve in the form of an orifice tube in accordance with any one of the preceding claims.

## Patentansprüche

1. Drosselrohr zur Benutzung in einer Autoklimaanlage als ein Expansionsventil zum Expandieren des in einem Kühlkreislauf von seiner Seite hohen Druckes zu seiner Seite niedrigen Druckes und in einen Verdampfer zirkulierenden Kühlmittels, wobei das Drosselrohr ein Gehäuse (33) und eine Einrichtung (32) in dem Gehäuse zum Vorsehen eines variablen Querschnittes für die Zirkulation des Kühlmittels in dem Kühlkreislauf aufweist; worin die Einrichtung (32) eine Flußfläche (31) durch das Gehäuse, die einen ersten Widerstand gegen den Fluß des Kühlmittels durch das Drosselrohr vorsieht, aufweist, dadurch gekennzeichnet, daß die Einrichtung (32) eine Masse (32) aus porösem Material, das in dem Gehäuse getragen ist und einen zweiten Widerstand gegen den Fluß des Kühlmittels durch das Drosselrohr parallel zu dem ersten Widerstand vorsieht, enthält, wobei der zweite Widerstand größer als der erste Widerstand ist, wodurch sich der effektive Querschnitt des Rohres vergrößert, wenn die Last auf die Klimaanlage steigt.

2. Drosselrohr nach Anspruch 1, bei dem die Flußfläche einen Hohlraum (31) aufweist, der durch das poröse Material (32) gebildet ist.

3. Drosselrohr nach Anspruch 1 oder 2, bei dem das Gehäuse (33) zylindrisch ist und das poröse Material (32) zylindrisch ist und sich koaxial innerhalb des Rohres erstreckt.

4. Drosselrohr nach Anspruch 2, bei dem sich der Hohlraum (31) koaxial durch das poröse Material (32) erstreckt.

5. Drosselrohr nach einem der vorhergehenden Ansprüche, bei dem das poröse Material kunststoffartig ist.

6. Drosselrohr nach einem der Ansprüche 1 bis 4, bei dem das poröse Material metallisch ist.

7. Autoklimaanlage mit einem Kühlkreislauf, der ein Expansionsventil in Form eines Drosselrohres nach einem der vorhergehenden Ansprüche aufweist.

## Revendications

1. Tube à orifice destiné à être utilisé en soupape d'expansion dans un système de conditionnement d'air de véhicule, pour détendre le réfrigérant en circulation dans un circuit de réfrigération, de son côté haute pression vers son côté basse pression, et pour le faire passer dans un évaporateur, le tube à orifice comprenant un boîtier ou enveloppe (33) et des moyens (32) placés dans l'enveloppe pour offrir une section transversale variable à la circulation du réfrigérant dans le circuit; dans lequel les moyens (32) comprennent une surface (31) de passage du débit dans l'enveloppe, cette surface offrant une première résistance au débit de passage du réfrigérant dans le tube à orifice, tube à orifice caractérisé en ce que les moyens (32) comprennent une masse (32) de matériau poreux placée dans l'enveloppe et offrant une seconde résistance au débit de passage du réfrigérant dans le tube à orifice parallèlement à la première résistance, la seconde résistance étant supérieure à la première résistance, de sorte que la section transversale effective du tube augmente lorsque le charge appliquée au système de conditionnement d'air augmente.

2. Tube à orifice selon la revendication 1, caractérisé en ce que la surface de passage du débit est constituée par une cavité (31) formée dans le matériau poreux (32).

3. Tube à orifice selon l'une quelconque des revendications 1 et 2, caractérisé en ce que l'enveloppe (33) est cylindrique et en ce que le matériau poreux (32) est cylindrique et se place coaxialement à l'intérieur du tube.

4. Tube à orifice selon la revendication 2, caractérisé en ce que la cavité (31) est disposée coaxialement dans le matériau poreux (32).

5. Tube à orifice selon l'une quelconque des revendications 1 à 4, caractérisé en ce que le matériau poreux est une matière plastique.

6. Tube à orifice selon l'une quelconque des revendications 1 à 4, caractérisé en ce que le matériau poreux est métallique.

7. Système de conditionnement d'air d'automobile utilisant un circuit de réfrigération comprenant une soupape d'expansion se présentant sous la forme d'un tube à orifice selon l'une quelconque des revendications précédentes.

*Fig.1.*

*Fig.2.*

*Fig.3.*

CIRCULATING REFRIGERANT MASS FLOW

(Kg/hr.)

AIR CONDITIONING LOAD (WATTS)

*Fig.4.*

PRESSURE LOSS ACROSS ORIFICE TUBE

$(10^5 Pa)$

AIR CONDITIONING LOAD (WATTS)

2